# EUROPEAN PATENT APPLICATION

(11) **EP 4 647 810 A1**
(43) Date of publication of application: **12.11.2025**
(21) Application number: 23917135.8
(22) Date of filing: 31.10.2023
(51) Int. Cl.: G01S 17/08, G01S 7/481

(54) **SIGNAL TRANSMISSION MECHANISM, LASER RANGING APPARATUS, AND MOBILE ROBOT**

(30) Priority: 17.01.2023 CN 202310118802; 02.08.2023 CN 202322072709 U
(71) Applicant: Shenzhen LDrobot Co., Ltd., Shenzhen, Guangdong 518000 (CN)
(72) Inventor: SUN, Zhiquan, Shenzhen, Guangdong 518000 (CN); FU, Jixuan, Shenzhen, Guangdong 518000 (CN); LIU, Bin, Shenzhen, Guangdong 518000 (CN); GUO, Gaihua, Shenzhen, Guangdong 518000 (CN); ZHOU, Wei, Shenzhen, Guangdong 518000 (CN)
(74) Representative: Primiceri, Maria Vittoria
(86) International application number: PCT/CN2023/128429
(87) International publication number: WO 2024/152667

(57) **Abstract**

Disclosed in the present application are a signal transmission mechanism, a laser ranging apparatus, and a mobile robot. The signal transmission mechanism of the present application comprises a transmitting module and a receiving module, the transmitting module being provided with a transmitting coil and a transmitting assembly, the receiving module being provided with a receiving coil and a receiving assembly, and the receiving assembly and the transmitting assembly being oppositely disposed. The transmitting coil is disposed on the transmitting assembly, and the receiving coil is disposed on the receiving assembly. The signal transmission mechanism provided in the embodiments of the present application is not limited by fixed structure heights of winding frame molds, so that newly developed model structures can be designed to be lighter and thinner.

## Description

### CROSS-REFERENCE TO RELATED APPLICATION

The present disclosure is filed on the basis of Chinese patent application No. 202310118802.1 filed January 17, 2023 and Chinese patent application No. 202322072709.X filed August 2, 2022, and claims priority to the Chinese patent applications, the entire contents of which are incorporated herein by reference.

### TECHNICAL FIELD

The present disclosure relates to the technical field of mobile robots, and specifically to a signal transmission mechanism, a laser ranging apparatus, and a mobile robot.

### BACKGROUND

Mobile robots are often equipped with a laser ranging apparatus to accurately measure the position (distance and angle), motion status (speed, vibration, and pose), and shape of a target, and detect, identify, distinguish, and track the target. To increase the measurement range, a laser ranging module for emitting a laser beam and receiving a reflected laser signal in conventional laser ranging apparatuses is often designed to be rotatable. The laser ranging apparatus performs electric energy and/or data transmission based on the principle of wireless electricity transmission, which is specifically implemented as follows: a transmitting coil is wound or laid on a first winding frame, a receiving coil is wound or laid on a second winding frame, and then the first winding frame is sleeved over the second winding frame or the second winding frame is sleeved over the first winding frame. Thus, the transmitting coil supplies electricity to the receiving coil by wireless electricity transmission. However, such laser ranging apparatuses require the use of winding frames, which have a long mold design cycle, fixed structural height, and large size, hindering the development of laser ranging apparatuses toward thinner and more lightweight designs.

### SUMMARY

The present disclosure aims to at least solve one of the technical problems in the related art. Therefore, the present disclosure provides a signal transmission mechanism, which can adjust the distance between the transmitting coil and the receiving coil by adjusting the positions of the transmitting assembly and the receiving assembly arranged opposite, to improve the signal transmission efficiency and adapt to various laser ranging apparatus designs. Particularly, thinner and more lightweight laser ranging apparatuses can be developed by reducing the distance between the transmitting coil and the receiving coil and/or reducing the size of the transmitting assembly and the size of the receiving assembly.

The present disclosure further provides a laser ranging apparatus including the signal transmission mechanism.

The present disclosure further provides a mobile robot including the laser ranging apparatus.

In accordance with a first aspect of the present disclosure, an embodiment provides a signal transmission mechanism, including:
a transmitting module, including a transmitting coil and a transmitting assembly; and
a receiving module, including a receiving coil and a receiving assembly, where the receiving assembly and the transmitting assembly are arranged opposite to each other,
where the transmitting coil is arranged on the transmitting assembly, and the receiving coil is arranged on the receiving assembly.

The signal transmission mechanism according to the embodiment of the present disclosure at least has the following beneficial effects.

The use of the signal transmission mechanism according to the embodiment of the present disclosure in a laser ranging apparatus and a mobile robot not only enables the laser ranging apparatus and the mobile robot to have excellent signal transmission efficiency, but also obviates the need of designing a winding frame mold in the development process, thereby shortening the development cycle. Further, the signal transmission mechanism according to the embodiment of the present disclosure overcomes the limitations of the fixed structural height of a winding frame mold and facilitates the development of laser ranging apparatuses toward thinner and more lightweight designs. The signal transmission mechanism can adjust the distance between the transmitting coil and the receiving coil by adjusting the positions of the transmitting assembly and the receiving assembly arranged opposite, to improve the signal transmission efficiency and adapt to various laser ranging apparatus designs. Particularly, thinner and more lightweight laser ranging apparatuses can be developed by reducing the distance between the transmitting coil and the receiving coil and/or reducing the size of the transmitting assembly and the size of the receiving assembly. Further, because no winding frame is used, the laser ranging apparatus does not need to provide an avoidance space for winding frames. As such, a thin and lightweight laser ranging apparatus with inconsistent appearance can be achieved.

According to some embodiments of the present disclosure, the transmitting assembly includes a first transmitting board and a second transmitting board which are electrically connected to each other, the second transmitting board is located between the first transmitting board and the receiving assembly, and the transmitting coil is configured in any one of the following forms:
the transmitting coil is printed on the second transmitting board; or
the transmitting coil is separately provided and is connected to the second transmitting board; and/or
the receiving assembly includes a first receiving board and a second receiving board which are electrically connected to each other, the second receiving board is located between the first receiving board and the transmitting assembly, and the receiving coil is configured in any one of the following forms:
the receiving coil is printed on the second receiving board; or
the receiving coil is separately provided and is connected to the second receiving board.

According to some embodiments of the present disclosure, the first transmitting board is connected to the second transmitting board by soldering or insertion, or the first transmitting board is connected to the second transmitting board by a first electrical connector; and/or
the first receiving board is connected to the second receiving board by soldering or insertion, or the first receiving board is connected to the second receiving board by a second electrical connector.

According to some embodiments of the present disclosure, when the first transmitting board is connected to the second transmitting board by the first electrical connector, the first electrical connector is arranged between the first transmitting board and the second transmitting board; and/or
when the first receiving board is connected to the second receiving board by the second electrical connector, the second electrical connector is arranged between the first receiving board and the second receiving board.

According to some embodiments of the present disclosure, when the first transmitting board is connected to the second transmitting board by the first electrical connector, the first electrical connector is a DuPont header; and/or when the first receiving board is connected to the second receiving board by the second electrical connector, the second electrical connector is a DuPont header.

According to some embodiments of the present disclosure, a first protruding portion is provided on a side of the first transmitting board adjacent to the receiving assembly, and the second transmitting board is arranged on the first protruding portion; and/or a second protruding portion is provided on a side of the first receiving board adjacent to the transmitting assembly, and the second receiving board is arranged on the second protruding portion.

According to some embodiments of the present disclosure, the transmitting coil is arranged on a surface of the transmitting assembly adjacent to the receiving assembly, and the receiving coil is arranged on a surface of the receiving assembly adjacent to the transmitting assembly.

According to some embodiments of the present disclosure, the transmitting assembly includes a first transmitting board, and the transmitting coil is configured in any one of the following forms:
the transmitting coil is printed on the first transmitting board; or
the transmitting coil is separately provided and is connected to the first transmitting board; and/or
the receiving assembly includes a first receiving board, and the receiving coil is configured in any one of the following forms:
the receiving coil is printed on the first receiving board; or
the receiving coil is separately provided and is connected to the first receiving board.

According to some embodiments of the present disclosure, the signal transmission mechanism further includes a magnetically conductive member, where the magnetically conductive member is arranged between the transmitting coil and the receiving coil.

According to some embodiments of the present disclosure, the magnetically conductive member includes a first end adjacent to the transmitting coil and a second end adjacent to the receiving coil, where an outer diameter of the first end is not larger than an outer diameter of the transmitting coil, and an outer diameter of the second end is not larger than an outer diameter of the receiving coil.

According to some embodiments of the present disclosure, a distance between the transmitting coil and the receiving coil is any value in a range of 0 to 1 cm.

In accordance with a second aspect of the present disclosure, an embodiment provides a laser ranging apparatus, including: the signal transmission mechanism of any one of the above embodiments, a support base, a rotating base, a driving module, and a laser ranging module, where the rotating base is rotatably connected to the support base, the transmitting module and the driving module are arranged on the support base, and the receiving module and the laser ranging module are arranged on the rotating base; and where the driving module is configured for driving the rotating base to rotate, and the laser ranging module is located on a side of the receiving module facing away from the transmitting module.

According to some embodiments of the present disclosure, the magnetically conductive member is connected to any one of the transmitting module, the receiving module, the support base, and the rotating base.

According to some embodiments of the present disclosure, the magnetically conductive member includes a plurality of magnetically conductive portions, at least one of the plurality of magnetically conductive portions is arranged on the transmitting module or the support base, and at least one of the plurality of magnetically conductive portions is arranged on the receiving module or the rotating base.

According to some embodiments of the present disclosure, the magnetically conductive portion arranged on the transmitting module or the support base is a first magnetically conductive portion, the magnetically conductive portion arranged on the receiving module or the rotating base is a second magnetically conductive portion, and the first magnetically conductive portion and the second magnetically conductive portion are configured in any one of the following forms:
a part of the first magnetically conductive portion is inserted into the second magnetically conductive portion;
a part of the second magnetically conductive portion is inserted into the first magnetically conductive portion;
the first magnetically conductive portion is sleeved over the second magnetically conductive portion;
the second magnetically conductive portion is sleeved over the first magnetically conductive portion; or
the first magnetically conductive portion and the second magnetically conductive portion are arranged spaced apart and opposite to each other along a rotational axis of the rotating base.

According to some embodiments of the present disclosure, the signal transmission mechanism further includes a magnetically conductive member, where the support base and the rotating base are rotatably connected by a bearing or a rotating shaft, a center of the bearing or the rotating shaft is provided with a first through hole axially running therethrough, and the magnetically conductive member is arranged in the first through hole.

According to some embodiments of the present disclosure, the magnetically conductive member is provided with a second through hole running therethrough along a rotational axis of the rotating base, and the first through hole is coaxial with the second through hole.

In accordance with a third aspect of the present disclosure, an embodiment provides a mobile robot including the laser ranging apparatus of the above embodiments.

Other aspects and advantages of the present disclosure will be given in the following description, some of which will become apparent from the following description or may be learned from practices of the present disclosure.

### BRIEF DESCRIPTION OF DRAWINGS

The present disclosure is further described below with reference to the accompanying drawings and embodiments. In the drawings:
FIG. 1 is a schematic structural diagram of a laser ranging apparatus according to an embodiment of the present disclosure;
FIG. 2 is a schematic exploded view of a laser ranging apparatus according to an embodiment of the present disclosure;
FIG. 3 is a schematic diagram illustrating a second receiving board and a first receiving board connected by a second electrical connector according to an embodiment of the present disclosure;
FIG. 4 is a schematic top view of a laser ranging apparatus according to an embodiment of the present disclosure;
FIG. 5 is a schematic cross-sectional view taken along line A-A in FIG. 4;
FIG. 6 is a schematic exploded view of a laser ranging apparatus according to another embodiment of the present disclosure;
FIG. 7 is a cross-sectional view of the laser ranging apparatus in the embodiment shown in FIG. 6;
FIG. 8 is a schematic exploded view of a laser ranging apparatus according to another embodiment of the present disclosure;
FIG. 9 is a cross-sectional view of the laser ranging apparatus in the embodiment shown in FIG. 8; and
FIG. 10 is a schematic enlarged view of a magnetically conductive member according to another embodiment of the present disclosure.

### List of reference numerals:

transmitting module 100; first transmitting board 110; transmitting coil 120; first signal transmission part 130; second transmitting board 140;
receiving module 200; first receiving board 210; receiving coil 220; second signal transmission part 230; second receiving board 240;
second electrical connector 250;
magnetically conductive member 300; first magnetically conductive portion 310; second magnetically conductive portion 320; second through hole 330;
support base 400; mounting frame 410; bottom shell 420; cover 430;
rotating base 500; rotational axis 510; turntable 520; hood 530;
bearing 600; first through hole 610;
driving module 700; driving member 710; driving gear 720; connection member 730;
laser ranging module 800.

### DETAILED DESCRIPTION

Embodiments of the present disclosure will be exemplarily described in detail hereinafter with reference to accompanying drawings in which the same or like reference characters refer to the same or like elements or elements having the same or like functions throughout. The embodiments described below by reference to the accompanying drawings are exemplary and are intended for explanation only and are not to be construed as limiting the present disclosure.

In the description of the present disclosure, it should be understood that for the description of orientations, the orientation or positional relationships indicated by the terms such as "on," "below," "front," "rear," "left," and "right" are based on orientation or position relationships shown in the accompanying drawings, and are used only for ease and brevity of illustration and description, rather than indicating or implying that the mentioned apparatus or element must have a particular orientation or must be constructed and operated in a particular orientation. Therefore, such terms should not be construed as limiting of the present disclosure.

In the description of the present disclosure, the term "several" means one or more, the term "plurality of" (or multiple) means two or more, the terms such as "greater than," "less than," "exceed" prior to a number or series of numbers is understood to not including the number adjacent to the term. The terms such as "above", "blew", "within" prior to a number or series of numbers is understood to include the number adjacent to the term. If used herein, the terms such as "first" and "second" are merely used for distinguishing technical features, and are not intended to indicate or imply relative importance, or implicitly point out the number of the indicated technical features, or implicitly point out the order of the indicated technical features.

In the description of the present disclosure, unless otherwise explicitly defined, the terms such as "configure," "install/mount" and "connect" should be understood in a broad sense, and those having ordinary skill in the art can reasonably determine the specific meanings of the above terms in the present disclosure based on the specific contents of the technical scheme.

In the description of the present disclosure, the description with reference to the terms such as "an embodiment," "some embodiments," "exemplary embodiments," "example," "specific example," or "some example" means that specific features, structures, materials or characteristics described in connection with the embodiment or example are embraced in at least one embodiment or example of the present disclosure. In this specification, exemplary descriptions of the foregoing terms do not necessarily refer to the same embodiment or example. Moreover, the described specific features, structures, materials, or characteristics may be combined in any suitable manner in one or more embodiments.

Mobile robots, also known as automatic cleaners, robot vacuum cleaners, etc., are a type of smart household appliances that can automatically complete floor cleaning in a room. To enable mobile robots to perform cleaning work efficiently and reasonably in unknown environments, a scheme of deploying a laser ranging apparatus in the mobile robot is widely adopted in the industry. The mobile robot can use the laser ranging apparatus to realize the positioning and navigation of the mobile robot, and thus perform cleaning according to a reasonable path. Therefore, the laser ranging apparatus is one of the important components of mobile robots.

In the related art, a laser ranging apparatus performs electric energy and/or data transmission based on the principle of wireless electricity transmission, which is specifically implemented as follows: a transmitting coil 120 is wound or laid on a first winding frame, a receiving coil 220 is wound or laid on a second winding frame, and then the first winding frame is sleeved over the second winding frame or the second winding frame is sleeved over the first winding frame. Thus, one of the transmitting coil 120 and the receiving coil 220 is sleeved over the other, and the transmitting coil 120 supplies electricity to the receiving coil 220 by wireless electricity transmission. However, such laser ranging apparatuses require the use of winding frames, which have a long mold design cycle, fixed structural height, and large size, hindering the development of laser ranging apparatuses toward thinner and more lightweight designs.

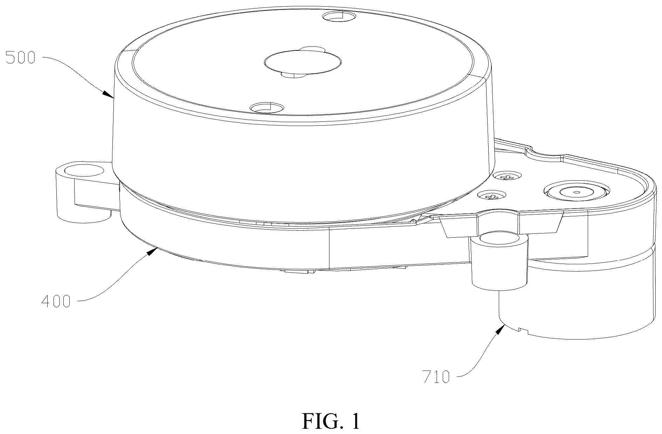

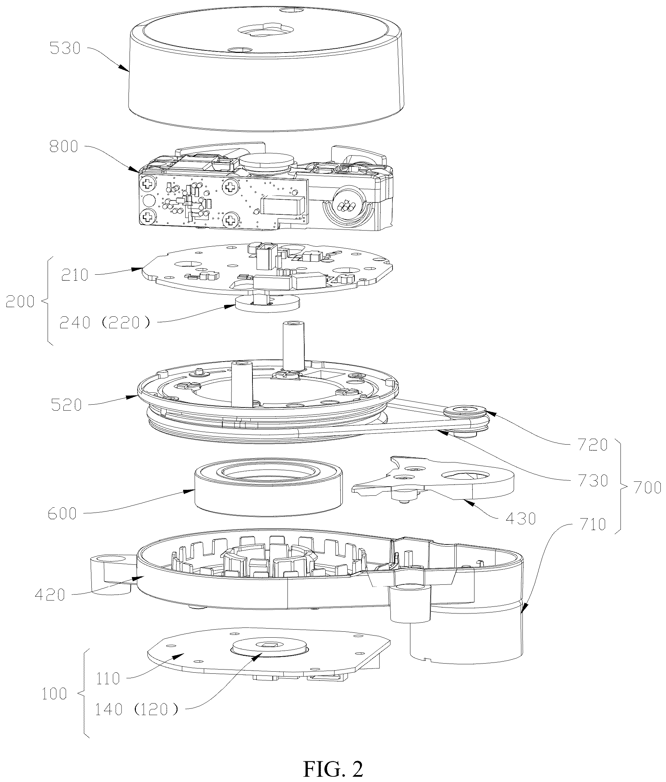

To solve the above technical problems, the present disclosure provides a signal transmission mechanism, a laser ranging apparatus, and a mobile robot. The mobile robot includes a main body and a laser ranging apparatus. The laser ranging apparatus is arranged on the main body. Laser ranging apparatus is an active remote sensing device that uses a laser emitter as the emitting light source and adopts photoelectric detection technology. As shown in FIG. 1 and FIG. 2, the laser ranging apparatus includes a signal transmission mechanism and a laser ranging module 800. The laser ranging apparatus further includes a support base 400, a rotating base 500, and a driving module 700. The support base 400 is rotatably connected to the rotating base 500. The driving module 700 is arranged on the support base 400 and is configured for driving the rotating base 500 to rotate. The laser ranging module 800 is received in the rotating base 500.

The driving module 700 includes a driving member 710, a driving gear 720, and a connection member 730. The driving gear 720 is connected to the driving member 710, and the driving gear 720 is connected to the rotating base 500 by the connection member 730 such as a belt, so that a rotation of the driving member 710 can drive the rotating base 500 to rotate, and the laser ranging module 800 arranged on the rotating base 500 can perform 360-degree laser ranging. In another embodiment, the driving module 700 includes a winding as a stator and a permanent magnet as a rotor, the winding is fixed to the support base 400, and the permanent magnet is fixed to the rotating base 500.

The support base 400 includes a bottom shell 420 and a cover 430, and the cover 430 covers the bottom shell 420 and is detachably connected to the bottom shell 420 to facilitate disassembly and assembly of the driving module 700. The rotating base 500 includes a turntable 520 and a hood 530 detachably connected to the turntable 520. The turntable 520 is rotatably connected to the bottom shell 420. The hood 530 is configured for covering the turntable 520. The laser ranging module 800 is located in an inner cavity defined by the hood 530.

The laser ranging apparatus may be configured for obstacle recognition, ranging, mapping and localization, lane boundary detection, etc. The working principle is as follows. After the laser ranging apparatus is turned on, a signal transmitter transmits a laser signal to a target object in a surrounding environment. The laser signal is reflected by the target object and received by the signal receiver. The received signal is processed to obtain related parameter information of the target object. The parameter information includes, for example, the distance, orientation, speed, altitude, pose, and shape of the target object relative to the laser ranging apparatus. The driving module 700 can drive the laser ranging module 800 to rotate, to increase the measurement range of the laser ranging apparatus.

Further, as shown in FIG. 2 to FIG. 5, the laser ranging module 800 is electrically connected to the signal transmission mechanism to realize unidirectional or bidirectional transmission of a signal between the laser ranging module 800 and the signal transmission mechanism. The signal includes, but is not limited to, an electrical signal, a control signal, and a data signal. The electrical signal is used for providing electrical energy to the laser ranging module 800. The control signal is used for controlling the operation of the laser ranging module 800. The data signal may be transmitted from the laser ranging module 800 to the signal transmission mechanism. The data signal may be a signal generated by the signal receiver, or an image signal captured by other components on the laser ranging module 800, such as imaging component. The data signal may also be transmitted from the signal transmission mechanism to the laser ranging module 800, and includes, but is not limited to, a data signal that needs to be processed by the laser ranging module 800. For example, when the laser ranging apparatus is used in a smart apparatus, the smart apparatus transmits its own parameters to the laser ranging module 800 through the signal transmission mechanism, and the laser ranging module 800 changes its original parameters upon analysis of the parameters of the smart apparatus, to meet operation requirements of the smart apparatus.

Since the receiving module 200 rotates relative to the transmitting module 100 along with the rotation of the rotating base 500, the use of conventional cable-based power supply to supply electricity to the laser ranging module 800 will lead to problems such as cable entanglement and limited rotation of the rotating base 500. Therefore, in the scheme of the embodiments of the present disclosure, a wireless power supply technology is used to supply electricity to the laser ranging module 800, so that the rotation of the rotating base 500 relative to the support base 400 is not affected.

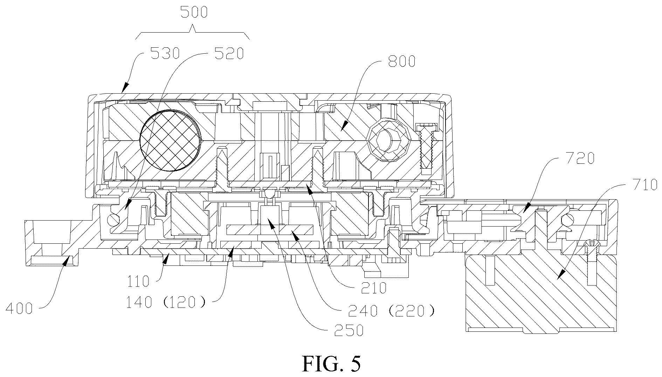

As shown in FIG. 2 to FIG. 5, the signal transmission mechanism includes a transmitting module 100 and a receiving module 200, the transmitting module 100 includes a transmitting assembly and a transmitting coil 120 arranged on the transmitting assembly, and the receiving module 200 includes a receiving assembly and a receiving coil 220 arranged on the receiving assembly. As shown in FIG. 2, the transmitting assembly may be a circuit board to control, encode, and otherwise process a signal to be transmitted, and the receiving assembly may also be a circuit board to decode or otherwise process a received signal. The transmitting assembly is arranged opposite to the receiving assembly, and the transmitting coil 120 and the receiving coil 220 are arranged in parallel as shown in FIG. 5, and are electromagnetically coupled to perform signal transmission. It should be noted that in the embodiment shown in FIG. 5, the transmitting coil 120 is integrated on a second transmitting board 140, and the receiving coil 220 is integrated on a second receiving board 240.

In view of the above, the embodiments of the present disclosure have the following beneficial effects. The use of the signal transmission mechanism according to the above scheme in a laser ranging apparatus and a mobile robot not only enables the laser ranging apparatus and the mobile robot to have excellent signal transmission efficiency, but also obviates the need of designing a winding frame mold in the development process, thereby shortening the development cycle. Further, the signal transmission mechanism of the embodiments of the present disclosure overcomes the limitations of the fixed structural height of a winding frame mold and facilitates the development of laser ranging apparatuses toward thinner and more lightweight designs.

The signal transmission mechanism can adjust the distance between the transmitting coil 120 and the receiving coil 220 by adjusting the positions of the transmitting assembly and the receiving assembly arranged opposite, to improve the signal transmission efficiency and adapt to various laser ranging apparatus designs. Particularly, thinner and more lightweight laser ranging apparatuses can be developed by reducing the distance between the transmitting coil 120 and the receiving coil 220 and/or reducing the size of the transmitting assembly and the size of the receiving assembly. Further, because no winding frame is used, the laser ranging apparatus does not need to provide an avoidance space for winding frames. As such, a thin and lightweight laser ranging apparatus with consistent appearance can be achieved.

In some embodiments, as shown in FIG. 2 to FIG. 5, the transmitting assembly includes a first transmitting board 110 and a second transmitting board 140 electrically connected to the first transmitting board 110, and the transmitting coil 120 is integrated on the second transmitting board 140 in the form of a printed circuit. It should be noted that the term "integrated" and variants thereof mean that a coil is formed in a circuit board (or other structural member) in the form of a printed circuit. The transmitting coil 120 and the receiving coil 220 are electromagnetically coupled to perform wireless signal transmission.

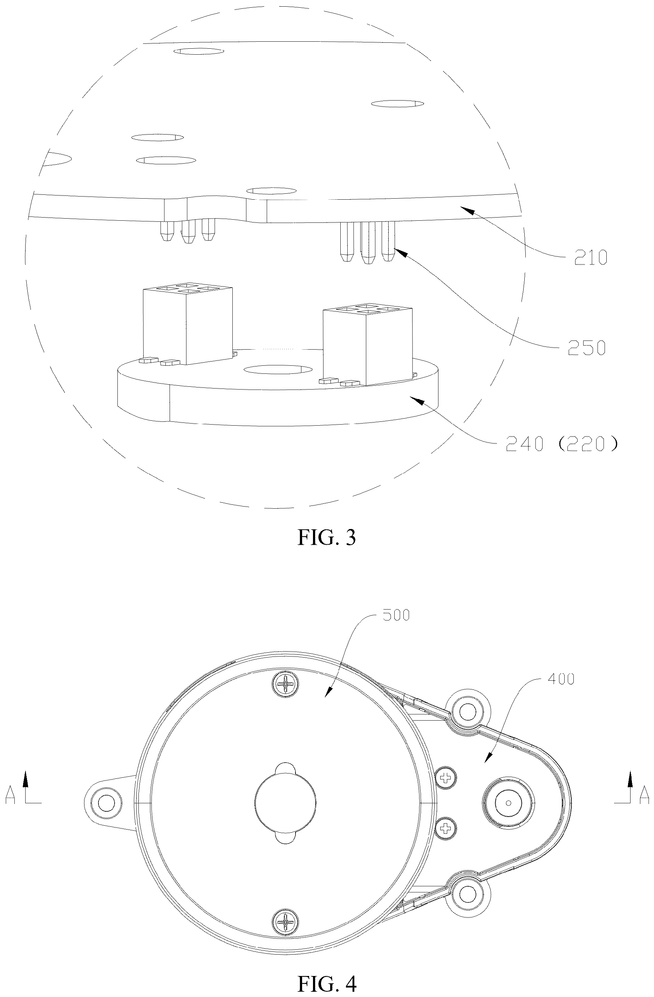

As shown in FIG. 2 and FIG. 4, the second transmitting board 140 is located between the first transmitting board 110 and the receiving assembly, so that the transmitting coil 120 is adjacent to the receiving coil 220 on the receiving assembly, thereby improving the efficiency of signal transmission between the transmitting coil 120 and the receiving coil 220. Further, since the transmitting coil 120 is integrated on the second transmitting board 140 in the form of a printed circuit, no improvement needs to be made on the first transmitting board 110. As such, the development cycle can be shortened while ensuring the original function of the first transmitting board 110. In some other embodiments, the transmitting assembly may be a transmitting circuit board, and the transmitting coil 120 is integrated on the transmitting circuit board in the form of a printed circuit. The transmitting coil 120 may be a circular or polygonal circuit structure.

Similarly, as shown in FIG. 2 and FIG. 4, the receiving assembly may include a first receiving board 210 and a second receiving board 240 electrically connected to the first receiving board 210, and the receiving coil 220 is integrated on the second receiving board 240 in the form of a printed circuit. The second receiving board 240 is located between the first receiving board 210 and the transmitting assembly, so that the receiving coil 220 is more adjacent to the transmitting coil 120 on the transmitting assembly.

The first transmitting board 110 transmits a signal to the transmitting coil 120 on the second transmitting board 140, the transmitting coil 120 wirelessly transmits the signal to the receiving coil 220 through electromagnetic coupling, the receiving coil 220 then transmits the signal to the first receiving board 210 through the second receiving board 240, and the first receiving board 210 transmits the signal to the laser ranging module 800. It can be understood that in some other embodiments, the first receiving board 210 may be part of the laser ranging module 800, the transmitting coil 120 wirelessly transmits the signal to the receiving coil 220 through electromagnetic coupling, and the receiving coil 220 then transmits the signal to the laser ranging module 800.

Based on the above embodiments, printing the coils respectively on the circuit boards can reduce the additional space required for separately arranging the coils, thereby reducing the size of the signal transmission mechanism.

In some other embodiments, the transmitting coil 120 may be a coil formed by winding a metal wire, which is arranged independently of the second transmitting board 140 (not shown). As such, the coil can be separately provided and be connected to the second transmitting board 140 by, for example, but not limited to, soldering, insertion, snap-fit, to realize electrical conduction. In such embodiments, the transmitting coil 120 is arranged protruding from a surface of the second transmitting board 140, and the arrangement of the transmitting coil 120 does not affect the planning of a circuit on the second transmitting board 140. Therefore, the size of the transmitting coil 120 is not limited by the circuit on the second transmitting board 140, and is suitable for signal transmission mechanisms requiring a high magnetic flux and a large coil specification. Similarly, the receiving coil 220 may be separately provided and be connected to the second receiving board 240.

It can be understood that the above two implementations of the transmitting coil 120 and the two implementations of the receiving coil 220 can be arbitrarily combined. In other words, the transmitting coil 120 and the receiving coil 220 may be respectively printed on corresponding circuit boards; or the transmitting coil 120 and the receiving coil 220 may be separately provided and be respectively connected to corresponding circuit boards; or the transmitting coil 120 may be printed on the second transmitting board 140, and the receiving coil 220 may be separately provided and be connected to the second receiving board 240; or the transmitting coil 120 may be separately provided and be connected to the second transmitting board 140, and the receiving coil 220 may be printed on the second receiving board 240.

In some embodiments, the first transmitting board 110 is connected to the second transmitting board 140 by soldering or insertion. Specifically, the first transmitting board 110 may be connected to the second transmitting board 140 by manual soldering or insertion. The first transmitting board 110 may be connected to the second transmitting board 140 by surface mount technology (SMT) soldering instead of manual soldering, thereby improving production efficiency. In some other embodiments, similar to the connection of the first receiving board 210 and the second receiving board 240 by a second electrical connector 250 in FIG. 3, the first transmitting board 110 may be connected to the second transmitting board 140 by a first electrical connector (not shown), thereby saving the soldering process. The arrangement of the first electrical connector can also facilitate the rapid assembly of the first transmitting board 110 and the second transmitting board 140. When the first transmitting board 110 is connected to the second transmitting board 140 by the first electrical connector, the first electrical connector is arranged between the first transmitting board 110 and the second transmitting board 140.

The first electrical connector may be of various sizes. The first electrical connector of different sizes may be used to adjust the first distance between the first transmitting board 110 and the second transmitting board 140, so as to improve the efficiency of signal transmission between the transmitting coil 120 and the receiving coil 220 and meet the requirements on the distance between the transmitting coil 120 and the receiving coil 220 and the distance between the transmitting assembly and the receiving assembly in different laser ranging apparatuses. In addition, the space required for mounting the signal transmitting mechanism can be reduced as much as possible, thereby making the appearance and shape of the signal transmitting mechanism as consistent as possible. In this embodiment, the first electrical connector may be a DuPont header. It can be understood that in some other embodiments, the first electrical connector may be a conductive structure having a snap-fit, insertion, or other structures.

Similarly, the first receiving board 210 may be connected to the second receiving board 240 by soldering or insertion. Alternatively, as shown in FIG. 2 and FIG. 3, the first receiving board 210 is connected to the second receiving board 240 by the second electrical connector 250, and the arrangement of the second electrical connector 250 can also facilitate the rapid assembly of the first receiving board 210 and the second receiving board 240, and facilitate the combination of the first receiving board 210 and the second receiving board 240 which may be of different types. When the first receiving board 210 is connected to the second receiving board 240 by the second electrical connector 250, the second electrical connector 250 is arranged between the first receiving board 210 and the second receiving board 240. The second electrical connector 250 of different sizes may be used to adjust the second distance between the first receiving board 210 and the second receiving board 240, so as to improve the efficiency of signal transmission between the transmitting coil 120 and the receiving coil 220 and meet the requirements on the distance between the transmitting coil 120 and the receiving coil 220 and the distance between the transmitting assembly and the receiving assembly in different laser ranging apparatuses. The second electrical connector 250 may be a DuPont header. In some other embodiments, the second electrical connector 250 may be a conductive structure having a snap-fit, insertion, or other structures.

In some embodiments, the function of the second transmitting board 140 is integrated on the first transmitting board 110, so the transmitting assembly includes the first transmitting board 110 and a transmitting coil 120 separately arranged and connected to the first transmitting board 110, the transmitting coil 120 being located between the first transmitting board 110 and the receiving assembly. The transmitting coil 120 may be connected to the first transmitting board 110 by soldering, insertion, or other means. Alternatively, with reference to the description of electrical connectors in the above embodiments, the transmitting coil 120 is connected to the first transmitting board 110 by the first electrical connector, and the distance from the transmitting coil 120 to the receiving coil 220 can be adjusted by the length of the first electrical connector. Similarly, the function of the second receiving board 240 may be integrated on the first receiving board 210, so the receiving coil 220 is separately provided and is connected to the first receiving board 210. It can be understood that the receiving coil 220 may be connected to the first receiving board 210 by the second electrical connector 250 and located between the first receiving board 210 and the transmitting assembly.

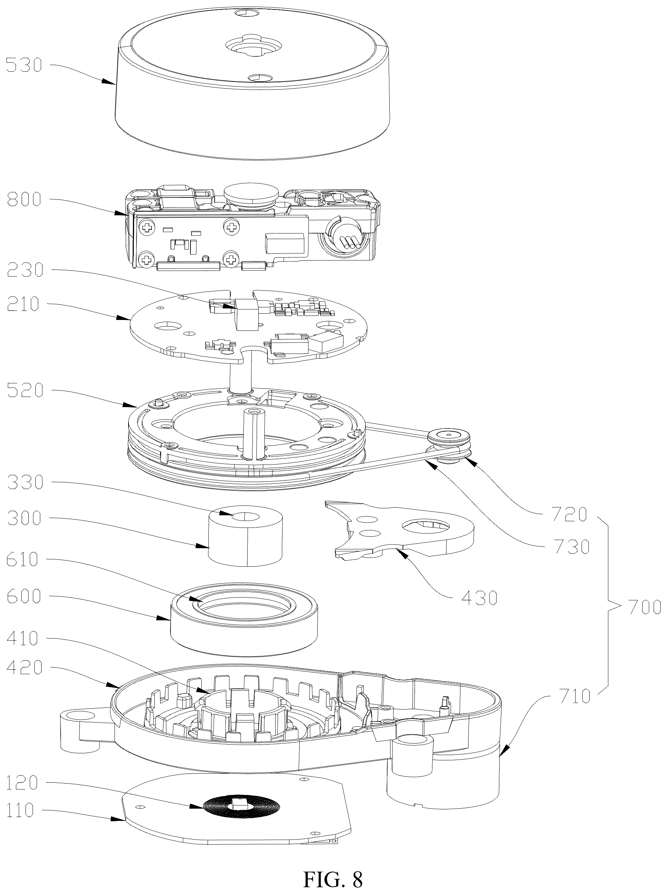

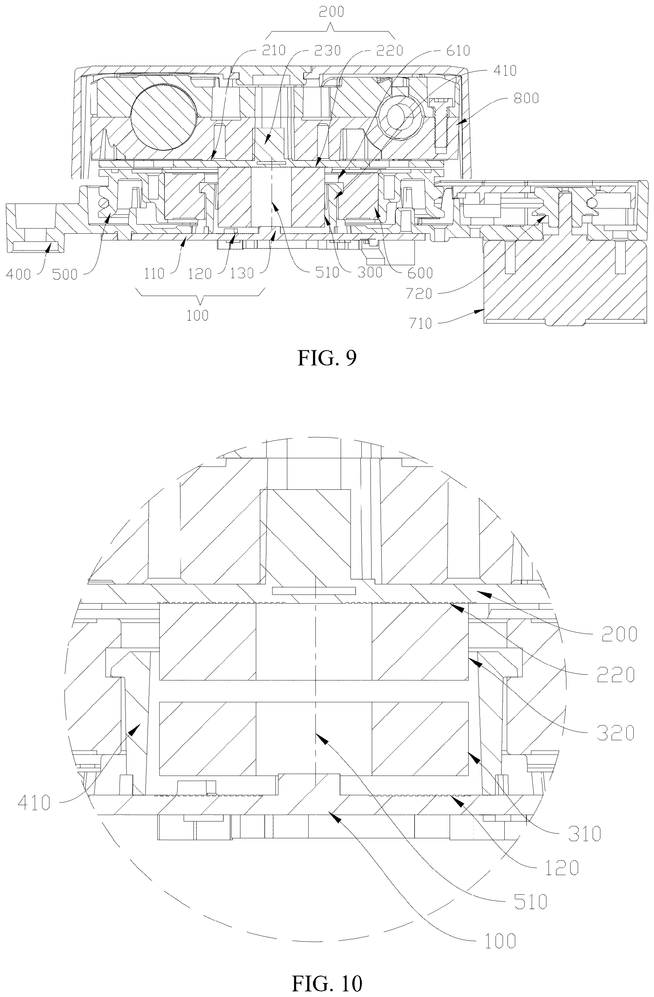

Alternatively, as shown in FIG. 8 and FIG. 9, the transmitting coil 120 may be printed on the first transmitting board 110, and the receiving coil 220 may be printed on the first receiving board 210, making the overall structure more compact.

In the embodiments shown in FIG. 1 to FIG. 10, the first transmitting board 110 has a planar shape, and has a plurality of components such as resistor, a capacitor, and electronic control chip arranged thereon. In some other embodiments, the first transmitting board 110 has a non-planar shape, and includes a first protruding portion arranged on a side of the first transmitting board 110 adjacent to the receiving assembly. The second transmitting board 140 is arranged on the first protruding portion. Since the transmitting coil 120 is arranged on the second transmitting board 140, the first transmitting board 110 of this structure reduces the distance between the transmitting coil 120 and the receiving assembly.

Similarly, the first receiving board 210 may also have a non-planar shape. For example, the first receiving board 210 includes a second protruding portion arranged on a side of the first receiving board 210 adjacent to the transmitting assembly. The second receiving board 240 is arranged on the second protruding portion. Since the receiving coil 220 is arranged on the second receiving board 240, the first receiving board 210 of this structure reduces the distance between the receiving coil 220 and the transmitting assembly.

In view of the above, in the signal transmission mechanism, a non-planar first transmitting board 110 and a planar first receiving board 210 may be provided, or a planar first transmitting board 110 and a non-planar first receiving board 210 may be provided, or a non-planar first transmitting board 110 and a non-planar first receiving board 210 may be provided. All of the above configurations can reduce the distance between the receiving coil 220 and the transmitting coil 120.

It can be understood that a top surface of the first protruding portion away from the first transmitting board 110 may be an arc surface, an inclined surface, or the like, and correspondingly, a top surface of the second protruding portion away from the first receiving board 210 is configured as an arc surface, an inclined surface, or the like, which matches the first protruding portion.

In some embodiments, referring to FIG. 2 and FIG. 5, the transmitting coil 120 is integrated on a side adjacent to the receiving assembly and the receiving coil 220 is integrated on a side adjacent to the transmitting assembly. As such, the transmitting coil 120 and the receiving coil 220 are more adjacent to each other without being interfered by the transmitting assembly and the receiving assembly, thereby further improving the efficiency of signal transmission between the transmitting coil 120 and the receiving coil 220.

It can be understood that the distance between the transmitting coil 120 and the receiving coil 220 is any value in a range of 0 to 1 cm, and a good signal transmission effect is achieved between the transmitting coil 120 and the receiving coil 220 when the distance between the transmitting coil 120 and the receiving coil 220 is within this range.

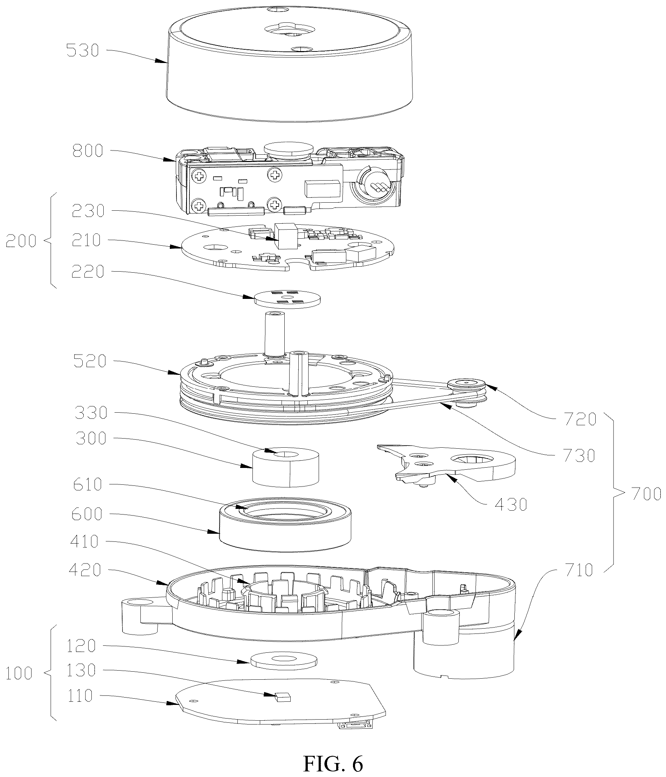

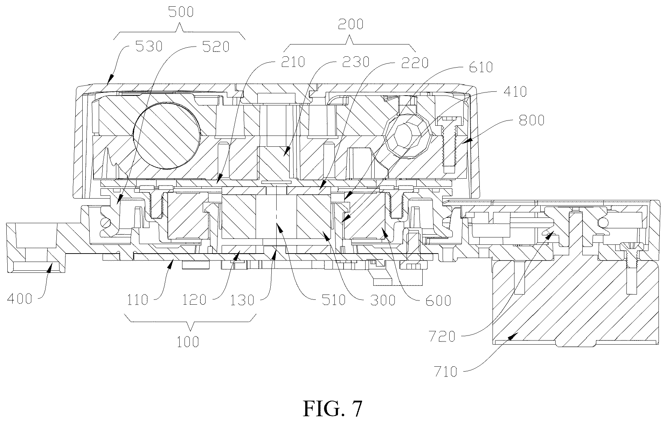

In some embodiments, as shown in FIG. 6 and FIG. 7, the rotating base 500 is rotatably connected to the support base 400 by a bearing 600. The arrangement of the bearing 600 separates the transmitting module 100 from the receiving module 200, leading to a large distance between the transmitting module 100 and the receiving module 200, resulting in low efficiency of wireless power supply between the transmitting module 100 and the receiving module 200, and increased power consumption. To solve this problem, as shown in FIG. 1 and FIG. 2, in an embodiment of the present disclosure, a magnetically conductive member 300 is arranged between the transmitting coil 120 and the receiving coil 220. The magnetically conductive member 300 is made of a magnetically conductive material, and may be cylindrical, prismatic, or in other shapes. The magnetically conductive member 300 can significantly enhance the magnetic flux between the receiving coil 220 and the transmitting coil 120, thereby improving the electricity transmission efficiency and reducing the power consumption of the laser ranging apparatus.

In some embodiments, as shown in FIG. 7 and FIG. 9, the magnetically conductive member 300 includes a first end and a second end, and when the magnetically conductive member 300 is of a cylindrical structure, the first end and the second end are two ends of the magnetically conductive member 300 in the axial direction. The first end of the magnetically conductive member 300 is arranged adjacent to the transmitting coil 120, and the second end of the magnetically conductive member 300 is arranged adjacent to the receiving coil 220. It should be noted that an outer diameter of the first end is not larger than an outer diameter of the transmitting coil 120, and an outer diameter of the second end is not larger than an outer diameter of the receiving coil 220, thus achieving a good electricity transmission effect.

In a further embodiment, as shown in FIG. 7, a plane perpendicular to a rotational axis 510 of the rotating base 500 is defined as a projection plane, and projection areas of the transmitting coil 120 and the receiving coil 220 on the projection plane coincide with each other, thus achieving a better electricity transmission effect. A projection area of the magnetically conductive member 300 is within the projection area of the transmitting coil 120 and the projection area of the receiving coil 220, i.e., the two ends of the magnetically conductive member 300 are arranged respectively corresponding to the transmitting coil 120 and the receiving coil 220, so that the magnetically conductive member 300 has a good magnetic conduction effect.

In accordance with the second aspect of the present disclosure, an embodiment provides a laser ranging apparatus, which includes the signal transmission mechanism described above, a support base 400, a rotating base 500, a driving module 700, and a laser ranging module 800. With the arrangement of the signal transmission mechanism for wireless electricity transmission, problems such as cable entanglement are avoided, and the laser ranging module 800 can perform 360-degree detection, achieving a large detection range. In addition, the signal transmission mechanism has high electricity transmission efficiency, which is beneficial to reducing the power consumption of the laser ranging apparatus.

In some embodiments, as shown in FIG. 6 and FIG. 7, the magnetically conductive member 300 is connected to any one of the transmitting module 100, the receiving module 200, the support base 400, and the rotating base 500. Specifically, the magnetically conductive member 300 may be arranged on the transmitting module 100. If the transmitting coil 120 is printed on the transmitting assembly, the magnetically conductive member 300 is connected to the transmitting assembly. If the transmitting coil 120 is separately provided and is connected to the transmitting assembly, the magnetically conductive member 300 is connected to the transmitting coil 120. The same also applies for the case in which the magnetically conductive member 300 is arranged on the receiving module 200. It should be noted that when the magnetically conductive member 300 is connected to the receiving module 200, the magnetically conductive member 300 rotates synchronously with the rotation of the receiving module 200.

Specifically, when one end of the magnetically conductive member 300 is connected to the transmitting module 100, the other end of the magnetically conductive member 300 is arranged spaced apart from the receiving module 200 by a distance of not more than 5 mm. Alternatively, when one end of the magnetically conductive member 300 is connected to the receiving module 200, the other end of the magnetically conductive member 300 is arranged spaced apart from the transmitting module 100 by a distance of not more than 5 mm.

It can be understood that the magnetically conductive member 300 may also be arranged on the support base 400. As shown in FIG. 6 and FIG. 7, a mounting frame 410 extending toward the rotating base 500 is arranged on the support base 400, and a free end of the mounting frame 410 is embedded on a wall of an inner ring of the bearing 600 to realize the connection between the inner ring of the bearing 600 and the support base 400. The magnetically conductive member 300 may be arranged on the mounting frame 410, and this arrangement can also realize the electricity transmission function between the transmitting module 100 and the receiving module 200. Similarly, a supporting frame is further arranged on the rotating base 500, and the magnetically conductive member 300 may be arranged on the supporting frame.

In a further embodiment, as shown in FIG. 10, the magnetically conductive member 300 includes a plurality of magnetically conductive portions, through which signal transmission is realized. It can be understood that at least one magnetically conductive portion is arranged on the transmitting module 100 or the support base 400, and at least one magnetically conductive portion is arranged on the receiving module 200 or the rotating base 500. Further, a magnetically conductive portion may also be arranged on the bearing 600 or a rotating shaft located between the transmitting module 100 and the receiving module 200. As such, a signal can be transmitted through the three magnetically conductive portions.

The magnetically conductive portion arranged on the transmitting module 100 or the support base 400 in the above embodiments is defined as a first magnetically conductive portion 310, and the magnetically conductive portion arranged on the receiving module 200 or the rotating base 500 in the above embodiments is defined as the second magnetically conductive portion 320. In some embodiments (not shown), a recess is provided at an end of the second magnetically conductive portion 320 away from the receiving module 200, and an end of the first magnetically conductive portion 310 away from the transmitting module 100 is partially inserted into the recess of the second magnetically conductive portion 320. Alternatively, a recess is provided at an end of the first magnetically conductive portion 310 away from the transmitting module 100, and an end of the second magnetically conductive portion 320 away from the receiving module 200 is partially inserted into the recess of the first magnetically conductive portion 310.

In some other embodiments (not shown), the first magnetically conductive portion 310 is provided with a through hole, and the second magnetically conductive portion 320 is arranged in the through hole, so that the first magnetically conductive portion 310 is sleeved over the second magnetically conductive portion 320. Alternatively, the second magnetically conductive portion 320 is provided with a through hole, and the first magnetically conductive portion 310 is arranged in the through hole, so that the second magnetically conductive portion 320 is sleeved over the first magnetically conductive portion 310.

In some other embodiments, as shown in FIG. 10, the first magnetically conductive portion 310 and the second magnetically conductive portion 320 may be arranged spaced apart and opposite to each other along the rotational axis 510 of the rotating base 500 to respectively connect to a transmitting end and a receiving end.

Since the second magnetically conductive portion 320 needs to rotate synchronously with the rotating base 500, the weight of the second magnetically conductive portion 320 is configured to be not greater than the weight of the first magnetically conductive portion 310 to avoid an increase in the driving load of the driving member 710 due to excessive weight of the rotary portion.

In a further embodiment, as shown in FIG. 6 to FIG. 9, the rotating base 500 is connected to an outer ring of the bearing 600, and the support base 400 is connected to an inner ring of the bearing 600, so that the rotating base 500 is rotatably connected to the support base 400. A center of the bearing 600 is provided with a first through hole 610 axially running therethrough, and the transmitting coil 120 and the receiving coil 220 are respectively arranged at two ends of the first through hole 610 in the axial direction, and perform wireless electricity transmission through the first through hole 610. At least one of the transmitting coil 120 and the receiving coil 220 extends into the first through hole 610. Taking a configuration scheme in which the transmitting coil 120 is provided separately from a transmitting circuit board and is connected to the transmitting circuit board as an example, the transmitting coil 120 is arranged protruding from the transmitting circuit board, an outer diameter of the transmitting coil 120 is smaller than an inner diameter of the first through hole 610 of the bearing 600, and the transmitting coil 120 extends into the first through hole 610, and transmits electrical energy through the magnetically conductive member 300 inserted into the first through hole 610. It can be understood that in some other embodiments, when both the transmitting coil 120 and the receiving coil 220 extend into the first through hole 610, the length of the magnetically conductive member 300 is less than the depth of the first through hole 610.

In some other embodiments, as shown in FIG. 6 and FIG. 9, compared with the above embodiments where the magnetically conductive member 300 is connected to the transmitting module 100 or the receiving module 200, in this embodiment, the magnetically conductive member 300 is coaxially arranged in the first through hole 610 of the bearing 600, and is connected to the bearing 600. Specifically, an outer peripheral wall of the magnetically conductive member 300 is connected to the wall of the inner ring of the bearing 600, so that the magnetically conductive member 300 is fixed in the first through hole 610.

It can be understood that in the embodiments, the support base 400 may also be connected to the rotating base 500 by a rotating shaft; and one end of the rotating shaft may be perpendicularly arranged on the support base 400 and the other end of the rotating shaft may be rotatably connected to the rotating base 500, or one end of the rotating shaft may be perpendicularly arranged on the rotating base 500 and the other end of the rotating shaft may be rotatably connected to the support base 400. Alternatively, the two ends of the rotating shaft are respectively rotatably connected to the support base 400 or the rotating base 500. A center of the rotating shaft may also be provided with a first through hole 610 axially running therethrough, and the magnetically conductive member 300 may be arranged in the first through hole 610 and connected to the rotating shaft.

In some embodiments, the magnetically conductive member 300 is inserted into the first through hole 610, and the two ends of the magnetically conductive member 300 are arranged protruding from an end surface of the bearing 600. The magnetically conductive member 300 may be connected to the receiving module 200 thereabove, and then suspended in the first through hole 610, and a lower end of the magnetically conductive member 300 protrudes from a lower end surface of the bearing 600, so that the magnetically conductive member 300 is more adjacent to the transmitting module 100, thereby reducing the electricity loss of the transmitting coil 120 during electricity transmission. Alternatively, the magnetically conductive member 300 may be connected to the transmitting module 100 therebelow, and then inserted into the first through hole 610, and an upper end of the magnetically conductive member 300 protrudes from an upper end surface of the bearing 600, so that the magnetically conductive member 300 is more adjacent to the receiving module 200, thereby reducing the electricity loss of the receiving coil 220 during electricity transmission.

In some embodiments, as shown in FIG. 6 and FIG. 9, the magnetically conductive member 300 is further provided with a second through hole 330 along the rotational axis 510 of the rotating base 500, and when the magnetically conductive member 300 is of a cylindrical structure, the second through hole 330 extends in an axial direction of the magnetically conductive member 300. The laser ranging apparatus further includes a first signal transmission part 130 and a second signal transmission part 230. It can be understood that the second through hole 330 is coaxial with the first through hole 610 of the bearing 600, the first signal transmission part 130 is arranged at a center of the transmitting coil 120, and the second signal transmission part 230 is arranged at a center of the receiving coil 220. The first signal transmission part 130 and the second signal transmission part 230 may each be an optoelectronic communication module, an infrared communication module, a Bluetooth communication module, etc., and can wirelessly transmit communication data through the second through hole 330. The communication data includes instructions, data, etc. The first signal transmission part 130 may be a transmitting end of the communication data, and the second signal transmission part 230 may be a receiving end of the communication data, to transmit an instruction to the laser ranging module 800. Alternatively, the first signal transmission part 130 may be a receiving end of the communication data, and the second signal transmission part 230 may be a transmitting end of the communication data, to transmit data detected by the laser ranging module 800.

In some other embodiments, the transmitting coil 120 is further configured for sending or receiving communication data, and correspondingly, the receiving coil 220 is further configured for receiving or sending communication data. During a ranging operation performed by the laser ranging apparatus, the laser ranging module 800 acquires measurement data; then, various ranging data such as distance data, angle data, etc., is loaded on the receiving coil 220 through the receiving circuit board, so that waveforms of a current and a voltage on the transmitting coil 120 also change accordingly; and the transmitting circuit board decodes the waveforms of the current and voltage on the transmitting coil 120, such as period and amplitude information to obtain measurement data. Similarly, the receiving circuit board can acquire a turning instruction, a movement instruction, etc. by decoding waveforms of a current and a voltage on the receiving coil 220, and further, the transmitting coil 120 and the receiving coil 220 can simultaneously perform data transmission and electricity transmission.

In accordance with a third aspect of the present disclosure, an embodiment provides a mobile robot including the laser ranging apparatus of any one of the above embodiments. Since the laser ranging apparatus has high electricity transmission efficiency and low power consumption, the power consumption of the mobile robot is further reduced.

The embodiments of the present disclosure have been described in detail above with reference to the accompanying drawings, but the present disclosure is not limited to the above embodiments, and various changes may be made within the knowledge of those having ordinary skills in the art without departing from the gist of the present disclosure. In addition, the embodiments of the present disclosure and the features in the embodiments may be combined with each other without conflict.

## Claims

1. A signal transmission mechanism, comprising:
a transmitting module (100), comprising a transmitting coil (120) and a transmitting assembly; and
a receiving module, comprising a receiving coil (220) and a receiving assembly, wherein the receiving assembly and the transmitting assembly are arranged opposite to each other,
wherein the transmitting coil (120) is arranged on the transmitting assembly, and the receiving coil (220) is arranged on the receiving assembly.

2. The signal transmission mechanism of claim 1, wherein the transmitting assembly comprises a first transmitting board (110) and a second transmitting board (140) which are electrically connected to each other, the second transmitting board (140) is located between the first transmitting board (110) and the receiving assembly, and the transmitting coil (120) is configured in any one of the following forms:
the transmitting coil (120) is printed on the second transmitting board (140); or
the transmitting coil (120) is separately provided and is connected to the second transmitting board (140); and/or
the receiving assembly comprises a first receiving board (210) and a second receiving board (240) which are electrically connected to each other, the second receiving board (240) is located between the first receiving board (210) and the transmitting assembly, and the receiving coil (220) is configured in any one of the following forms:
the receiving coil (220) is printed on the second receiving board (240); or
the receiving coil (220) is separately provided and is connected to the second receiving board (240).

3. The signal transmission mechanism of claim 2, wherein the first transmitting board (110) is connected to the second transmitting board (140) by soldering or insertion, or the first transmitting board (110) is connected to the second transmitting board (140) by a first electrical connector; and/or
the first receiving board (210) is connected to the second receiving board (240) by soldering or insertion, or the first receiving board (210) is connected to the second receiving board (240) by a second electrical connector (250).

4. The signal transmission mechanism of claim 3, wherein when the first transmitting board (110) is connected to the second transmitting board (140) by the first electrical connector, the first electrical connector is arranged between the first transmitting board (110) and the second transmitting board (140); and/or
when the first receiving board (210) is connected to the second receiving board (240) by the second electrical connector (250), the second electrical connector (250) is arranged between the first receiving board (210) and the second receiving board (240).

5. The signal transmission mechanism of claim 3, wherein when the first transmitting board (110) is connected to the second transmitting board (140) by the first electrical connector, the first electrical connector is a DuPont header; and/or when the first receiving board (210) is connected to the second receiving board (240) by the second electrical connector (250), the second electrical connector (250) is a DuPont header.

6. The signal transmission mechanism of claim 2, wherein a first protruding portion is provided on a side of the first transmitting board (110) adjacent to the receiving assembly, and the second transmitting board (140) is arranged on the first protruding portion; and/or a second protruding portion is provided on a side of the first receiving board (210) adjacent to the transmitting assembly, and the second receiving board (240) is arranged on the second protruding portion.

7. The signal transmission mechanism of claim 1, wherein the transmitting coil (120) is arranged on a surface of the transmitting assembly adjacent to the receiving assembly, and the receiving coil (220) is arranged on a surface of the receiving assembly adjacent to the transmitting assembly.

8. The signal transmission mechanism of claim 1, wherein the transmitting assembly comprises a first transmitting board (110), and the transmitting coil (120) is configured in any one of the following forms:
the transmitting coil (120) is printed on the first transmitting board (110); or
the transmitting coil (120) is separately provided and is connected to the first transmitting board (110); and/or
the receiving assembly comprises a first receiving board (210), and the receiving coil (220) is configured in any one of the following forms:
the receiving coil (220) is printed on the first receiving board (210); or
the receiving coil (220) is separately provided and is connected to the first receiving board (210).

9. The signal transmission mechanism of claim 1, further comprising a magnetically conductive member (300), wherein the magnetically conductive member (300) is arranged between the transmitting coil (120) and the receiving coil (220).

10. The signal transmission mechanism of claim 9, wherein the magnetically conductive member (300) comprises a first end adjacent to the transmitting coil (120) and a second end adjacent to the receiving coil (220), wherein an outer diameter of the first end is not larger than an outer diameter of the transmitting coil (120), and an outer diameter of the second end is not larger than an outer diameter of the receiving coil (220).

11. The signal transmission mechanism of claim 1, wherein a distance between the transmitting coil (120) and the receiving coil (220) is any value in a range of 0 to 1 cm.

12. A laser ranging apparatus, comprising:
the signal transmission mechanism of any one of claims 1 to 11, a support base (400), a rotating base (500), a driving module (700), and a laser ranging module (800), wherein the rotating base (500) is rotatably connected to the support base (400), the transmitting module (100) and the driving module (700) are arranged on the support base (400), and the receiving module and the laser ranging module (800) are arranged on the rotating base (500); and
wherein the driving module (700) is configured for driving the rotating base (500) to rotate, and the laser ranging module (800) is located on a side of the receiving module facing away from the transmitting module (100).

13. The laser ranging apparatus of claim 12, wherein the signal transmission mechanism further comprises a magnetically conductive member (300), the magnetically conductive member (300) is connected to any one of the transmitting module (100), the receiving module, the support base (400), and the rotating base (500).

14. The laser ranging apparatus of claim 12, wherein the signal transmission mechanism further comprises a magnetically conductive member (300), the magnetically conductive member (300) comprises a plurality of magnetically conductive portions, at least one of the plurality of magnetically conductive portions is arranged on the transmitting module (100) or the support base (400), and at least one of the plurality of magnetically conductive portions is arranged on the receiving module or the rotating base (500).

15. The laser ranging apparatus of claim 14, wherein the magnetically conductive portion arranged on the transmitting module (100) or the support base (400) is a first magnetically conductive portion (310), the magnetically conductive portion arranged on the receiving module or the rotating base (500) is a second magnetically conductive portion (320), and the first magnetically conductive portion (310) and the second magnetically conductive portion (320) are configured in any one of the following forms:
a part of the first magnetically conductive portion (310) is inserted into the second magnetically conductive portion (320);
a part of the second magnetically conductive portion (320) is inserted into the first magnetically conductive portion (310);
the first magnetically conductive portion (310) is sleeved over the second magnetically conductive portion (320);
the second magnetically conductive portion (320) is sleeved over the first magnetically conductive portion (310); or
the first magnetically conductive portion (310) and the second magnetically conductive portion (320) are arranged spaced apart and opposite to each other along a rotational axis (510) of the rotating base (500).

16. The laser ranging apparatus of claim 12, wherein the signal transmission mechanism further comprises a magnetically conductive member (300), the support base (400) and the rotating base (500) are rotatably connected by a bearing (600) or a rotating shaft, a center of the bearing (600) or the rotating shaft is provided with a first through hole (610) axially running therethrough, and the magnetically conductive member (300) is arranged in the first through hole (610).

17. The laser ranging apparatus of claim 16, wherein the magnetically conductive member (300) is provided with a second through hole (330) running therethrough along a rotational axis (510) of the rotating base (500), and the first through hole (610) is coaxial with the second through hole (330).

18. A mobile robot, comprising the laser ranging apparatus of any one of claims 12 to 17.
